# FASCICULE DE BREVET EUROPEEN

(11) **EP 3 439 900 B1**
(45) Date de publication et mention de la délivrance du brevet: **10.03.2021**
(21) Numéro de dépôt: 17720193.6
(22) Date de dépôt: 04.04.2017
(51) Int. Cl.: B60C 13/00

(54) **PNEUMATIQUE**
REIFEN
TIRE

(30) Priorité: 08.04.2016 FR 1600596
(43) Date de publication de la demande: 13.02.2019
(73) Titulaire: Compagnie Générale des Etablissements Michelin, 63000 Clermont-Ferrand (FR)
(72) Inventeur: DESVIGNES, Jean-Claude, 63040 CLERMONT-FERRAND Cedex 9 (FR); GLIBERT, Séverine, 63040 CLERMONT-FERRAND Cedex 9 (FR); MUHLHOFF, Olivier, 63040 CLERMONT-FERRAND Cedex 9 (FR)
(74) Mandataire: Demaure, Pierre-Yves
(86) Numéro de dépôt international: PCT/FR2017/050785
(87) Numéro de publication internationale: WO 2017/174919

(56) Documents cités:
- WO-A1-2015/165863
- WO-A2-2016/005572
- DE-A1-102013 223 566

## Description

### DOMAINE TECHNIQUE DE L'INVENTION

La présente invention concerne un pneumatique en matériau caoutchoutique dont au moins un des flancs comporte un symbole matriciel codé.

### ETAT DE LA TECHNIQUE ANTERIEURE

**De** nombreux types de marquages, inscriptions et codes sont apposés sur les flancs des pneumatiques. Les marquages et inscriptions servent typiquement à identifier les manufacturiers, les dimensions et les références des pneumatiques. Les codes normalisés, tels que QR code ™, Flashcode, MaxiCode ™, Datamatrix ™, et autres, déjà largement répandus dans des applications où le code est imprimé sur un support, commencent à être utilisés dans l'univers des pneumatiques. Or, les flancs des pneumatiques ne permettent pas d'imprimer les codes de façon classique. Les flancs sont en général très sombres, en matériau caoutchoutique, soit un support sur lequel il est particulièrement difficile de mettre en évidence des codes matriciels de façon aisément visible.

**Le** document WO2015/165863 décrit un pneumatique dont au moins un flanc porte un code matriciel. Le code matriciel comporte des parties sombres et des parties claires, les parties sombres étant composées d'une texture venue de matière avec le flanc et faisant contraste avec le reste du pneumatique. Les codes matriciels apposés selon l'enseignement de ce document sont susceptibles de présenter des niveaux de visibilité restreints lorsque les conditions lumineuses ne sont pas idéales, et/ou en cas de présence de salissures. Or, les utilisateurs qui souhaitent recevoir les données mises à disposition par le code n'ont pas toujours la possibilité de récupérer les données par un autre moyen en cas de non lisibilité. Il est donc essentiel que la lisibilité des codes matriciels soit vraiment optimale et ceci durant tout le temps d'utilisation du pneumatique. Les documents DE102013223566 et WO2016005572 divulguent un pneumatique comportant un symbole avec des parties sombres et des parties claires.

Pour pallier ces différents inconvénients, l'invention prévoit différents moyens techniques.

### EXPOSE DE L'INVENTION

Tout d'abord, un premier objet de l'invention consiste à prévoir un pneumatique en matériau caoutchoutique pourvu d'un symbole matriciel codé avec des caractéristiques de lisibilité optimales.

Un autre objet de l'invention consiste à prévoir un pneumatique en matériau caoutchoutique pourvu d'un symbole matriciel codé fiable, et permettant de récupérer les données correspondantes avec un pourcentage d'erreur minimal, voire sensiblement nul.

Pour ce faire, l'invention prévoit un pneumatique en matériau caoutchoutique tel que couvert par la revendication indépendante 1.

Un tel agencement du symbole matriciel codé permet d'améliorer les caractéristiques de lisibilité, rendant le symbole matriciel codé fiable pour tout type d'utilisations et quelles que soient les conditions d'utilisation.

De manière avantageuse, la seconde luminosité L*2 des parties sombres du symbole matriciel codé est comprise entre 5 et 18, et préférentiellement entre 8 et 16.

Egalement de manière avantageuse, la première luminosité L*1 des parties claires du symbole matriciel codé est comprise entre 20 et 35.

Selon un mode de réalisation avantageux, la seconde luminosité L*2 des parties sombres du symbole matriciel codé est comprise entre 8 et 16 et la première luminosité L*1 des parties claires est comprise entre la seconde luminosité L*2 des parties sombres augmentée de 8 points et la seconde luminosité L*2 des parties sombres augmentée de 16 points.

Selon un autre mode de réalisation avantageux, la seconde luminosité L*2 des parties sombres est comprise entre 8 et 16 et la première luminosité L*1 des parties claires est comprise entre 20 et 26.

Selon un mode de réalisation avantageux, deux parties sombres adjacentes sont séparées par une cloison. Une cloison comporte une épaisseur inférieure à la largeur d'une partie sombre. Elle est donc moins large que les parties sombres qu'elle sépare. Par exemple, les cloisons constituant les séparations ont une hauteur par rapport aux motifs en creux constituant les parties sombres comprise entre 0,1 et 0,8 mm. De manière avantageuse, les sommets des cloisons affleurent les parties claires. Un tel agencement permet, avec un éclairage rasant, d'obtenir la même ombre pour toutes les parties sombres. Cette caractéristique permet donc d'homogénéiser la luminosité des parties sombres entre elles, et donc de faciliter le décodage.

De manière avantageuse, des parties sombres sont globalement carrées. En variante, elles sont carrées avec des coins arrondis. Encore en variante, les parties sombres sont en forme de polygones constitués de plusieurs carrés groupés, dont chaque angle est de sensiblement 90 degrés. Ces variantes de réalisation permettent de maximiser la surface de pour un décodage facilité.

Selon encore une autre variante de réalisation, des parties sombres ont globalement une forme de disque. Cette caractéristique permet de faciliter l'étape de reconnaissance des parties sombres lors du décodage. Les disques sont plus faciles à reconnaitre que les carrés notamment parce que leurs centres peuvent être déterminés de manière plus précise lorsque les parties sombres sont partiellement altérées. Ainsi, même une prise de vue avec un léger flou peut être décodée.

De manière avantageuse, les parties sombres ont au moins une dimension comprise entre 0,2 mm et 1 mm, et plus préférentiellement entre 0,3 et 0,7 mm. Cette variante permet de miniaturiser la taille du code matriciel, miniaturisation rendue possible par tous les perfectionnements énoncés visant à faciliter le décodage.

Selon un mode de réalisation avantageux, les parties sombres sont délimitées par un sillon. Cet agencement favorise la visualisation des parties sombres en renforçant le contraste vis-à-vis des parties claires.

Selon encore un mode de réalisation, l'au moins un des flancs comprend une protubérance pour la protection du symbole matriciel codé. La protubérance est avantageusement prévue dans la région du flanc axialement la plus extérieure. Le symbole matriciel est avantageusement agencé à proximité immédiate de la protubérance, pour une protection maximale.

De manière avantageuse, l'ensemble du symbole matriciel codé est encastré par rapport à la surface extérieure du flanc du pneumatique, la profondeur d'encastrement du symbole matriciel codé étant préférentiellement comprise entre 0,2 mm et 0,8 mm. Cette variante de réalisation permet de protéger le code matriciel des râpages et griffures que subissent les flancs des pneus lors des usages sévères.

De manière avantageuse, le symbole matriciel codé suit la courbure radiale de l'au moins un des flancs.

De manière avantageuse, chaque flanc du pneumatique comporte au moins un symbole matriciel codé. Cette variante permet de réaliser le décodage même si un des deux codes a été altéré ou est devenu indécodable.

Selon un autre mode de réalisation avantageux, les symboles matriciels codés sont différents d'un flanc à l'autre dudit pneumatique. Cette variante permet par exemple de donner une information sur l'orientation du pneu, par exemple pour un pneu directionnel ou asymétrique.

Selon encore un mode de réalisation avantageux, les parties claires du symbole matriciel codé sont réalisées au cours d'une opération de moulage du pneumatique et les parties sombres sont réalisées par un procédé de gravure au laser après cette opération de moulage.

De manière avantageuse, les parties sombres sont en creux par rapport aux parties claires, la profondeur de creux étant comprise entre 0,1 et 0,8 mm, et plus préférentiellement entre 0,2 et 0,5 mm. Grâce à un tel agencement, avec un éclairage rasant lors de la lecture du code, l'encastrement permet de générer une ombre abaissant la luminosité de la partie sombre et augmentant ainsi le contraste.

Selon un autre mode de réalisation avantageux, les parties sombres sont délimitées par des parois, ces parois étant inclinées par rapport à une normale N au flanc du pneumatique d'un angle de dépouille α compris entre 5 et 50 degrés. De manière préférentielle, l'angle de dépouille se situe entre 5 et 20 degrés. L'angle de dépouille permet de réduire la surface du fond susceptible de renvoyer de la lumière.

De manière avantageuse, pour tout ou partie des parties sombres, les parois d'une partie sombre se rejoignent préférentiellement au centre de cette partie. Cet agencement permet de former des pyramides inversées. Grâce à cette mise en forme, on réduit les risques de créer des amorces de fissuration et les contraintes en fond de parties sombres sont mieux réparties. L'extrémité de la pyramide peut être tronquée ou en forme arrondie.

Selon encore un mode de réalisation avantageux, le symbole matriciel codé est adapté pour coder des données sur 50 à 120 digits, et plus préférentiellement sur 96 digits.

L'invention prévoit également un procédé de réalisation d'un symbole matriciel codé sur un pneumatique, tel que couvert par la revendication indépendante 17.

Cette approche permet de générer des symboles matriciels codés de façon simple, efficace, avec une très grande souplesse quant au format du code et aux données à encoder.

Le traitement de surface est réalisé à l'aide d'un laser. Cet appareil permet de graver des zones selon une configuration de codage donnée avec une très grande précision et rapidité. De manière avantageuse, les données à encoder sont aisément obtenues à l'aide d'un outil ou logiciel d'encodage, prévu pour fournir des ensembles de codes adaptés pour des grandes quantités de pneumatiques à identifier. Les codes peuvent aisément être individualisés, permettant par exemple d'encoder des numéros d'identifications uniques pour chacun des pneumatiques. La mise en œuvre du laser ainsi que ses paramètres de pilotage sont adaptés pour enlever la matière du flanc de pneumatique juste nécessaire de manière à obtenir les géométries souhaitées.

### DESCRIPTION DES FIGURES

Tous les détails de réalisation sont donnés dans la description qui suit, complétée par les figures 1 à 16, présentées uniquement à des fins d'exemples non limitatifs, et dans lesquelles:
- la figure 1 représente un exemple de pneumatique portant un code matriciel apposé sur un flanc ;
- la figure 2 représente un autre exemple de pneumatique portant un code matriciel apposé sur un flanc ;
- la figure 3 est une coupe partielle d'un flanc d'un pneumatique selon l'invention ;
- la figure 4 illustre une portion d'une échelle de luminance, avec des valeurs préférentielles de luminosité pour les parties claires et les parties sombres d'un symbole matriciel codé réalisé sur un pneumatique selon l'invention ;
- les figures 5A et 5B illustrent schématiquement des vues agrandies d'un exemple d'un symbole matriciel codé réalisé sur un pneumatique selon l'invention en cours de réalisation, à différentes étapes ;
- la figure 6 montre l'exemple de la figure 5 après mise en œuvre complétée ;
- les figures 7 et 8 montrent des exemples de profils de parties sombres pour un symbole matriciel codé réalisé sur un pneumatique selon l'invention ;
- les figures 9 à 11 illustrent des exemples d'agencements de parties claires et sombres ;
- la figure 12 illustre un autre exemple de type de partie sombre ;
- les figures 13 et 14 illustrent, vue en coupe, des exemples pratiques de géométries de parties sombres.
- la figure 15 illustre, vue en coupe, un autre exemple de réalisation de parties sombres ;
- la figure 16 illustre schématiquement un autre exemple de pneumatique portant un code matriciel apposé sur un flanc et protégé par une protubérance.

### DESCRIPTION DETAILLEE DE L'INVENTION

### Définitions

**Par** « venu de matière », on entend un élément ou zone d'un corps qui est réalisé dans le même matériau que le corps lui-même, dans la continuité de celui-ci, sans être rapporté. Un élément venu de matière avec un autre forme une seule et même pièce avec ce dernier.

**Par** « luminosité », « luminance », ou « clarté », on entend le paramètre qui caractérise la capacité d'une surface à réfléchir plus ou moins la lumière. La luminosité L* est exprimée dans une échelle allant de 0 à 100 selon le modèle colorimétrique L*a*b* établit par la CIE (Commission Internationale de l'Eclairage) en 1976. La valeur 100 représente le blanc ou la réflexion totale ; la valeur 0, le noir ou l'absorption totale. Dans ce modèle colorimétrique a* et b* sont des coordonnées de chromaticité. Le modèle colorimétrique L*a*b* définit également un diagramme de chromaticité. Dans ce diagramme, a* et b* indiquent la direction des couleurs : +a* va vers le rouge, -a* vers le vert, +b* vers le jaune, et -b* vers le bleu. Le centre du diagramme est achromatique. Au fur et à mesure que les valeurs a* et b* augmentent, et que l'on s'éloigne donc du centre du diagramme, la saturation augmente.

**Par** « symbole matriciel codé », on entend un code dit « intelligent » où les données sont encodées en deux dimensions (sous la forme d'une pluralité de rangées et de colonnes), les données étant décodables par un imageur d'une machine, tel qu'un téléphone portable. Un symbole matriciel codé encode un volume nettement plus important de données pour une même surface donnée qu'un code barre linéaire traditionnel et comporte un système intégré de correction d'erreurs. Le symbole matriciel codé est un symbole sélectionné parmi un ensemble de symboles comportant notamment :
- un datamatrix ™
- un QR™ ;
- un QR code™ ;
- un MaxiCode™ ;
- un PDF-417™ ;
- un code 16K™ ;
- un code 49™ ;
- un code Aztec™

Les pneumatiques modernes possèdent la particularité de posséder sur leur surface externe une couleur sombre qui ne favorise pas les conditions de décodage des symboles matriciels codés. De plus, après leur fabrication, la surface des pneumatiques change de composition progressivement suite à une migration de substances chimiques contenues à l'intérieur du pneumatique vers sa surface extérieure. La surface extérieure du pneumatique est ainsi recouverte progressivement par exemple de cires. Ces cires ne sont pas transparentes et changent la couleur et l'aspect du flanc, complexifiant encore le décodage des symboles matriciels codés.

L'expérience montre que des rugosités de surface permettant de différencier les parties sombres et les parties claires d'un code 2D se retrouvent au moins partiellement masquées par ces remontées de cires, ce qui entraine une diminution du contraste avec le temps, lié au vieillissement du pneumatique.

Il existe aussi d'autres phénomènes de masquage entrainant des diminutions de contraste, tels que les salissures liées aux poussières, notamment celles venant des plaquettes de freins.

Les conditions de décodage sont donc souvent délicates, et des décodeurs performants sont préférentiellement utilisés.

Des dispositifs de décodage très performants existent aujourd'hui. Ils sont souvent pourvus de moyens permettant d'optimiser les performances de décodage, tels qu'un éclairage adapté et maitrisé, des logiciels perfectionnés et spécifiquement adaptés, etc. Les moyens actuels de décodage ont une très bonne capacité à décoder des réalisations de code 2D dans toutes les situations car ils permettent, notamment, un éclairage maitrisé du code au moment du décodage. Ainsi, ils permettent de décoder des codes possédant une faible différence de luminosité entre partie sombres et parties claires.

Cette capacité est très intéressante pour pouvoir décoder des codes 2D sur des pneumatiques ayant vieillis.

Le symbole matriciel codé réalisé sur un pneumatique selon l'invention permet avantageusement de prolonger dans le temps, lorsque le pneumatique vieilli, la possibilité de décodage d'un code agencé sur le flanc du pneu.

La solution technique proposée permet aussi de faciliter le décodage par des moyens professionnels, ou non professionnels, comme par exemple de type « smartphone ».

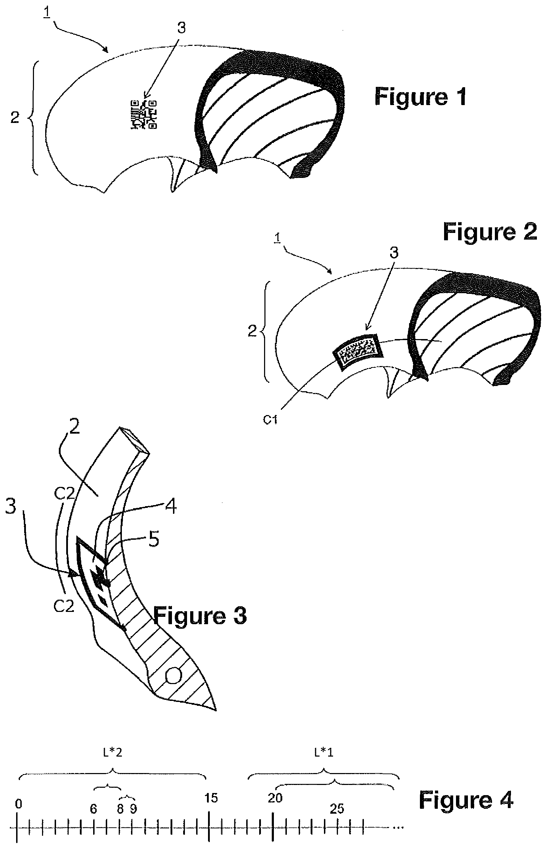

La figure 1 montre une vue partielle d'un pneumatique 1 comportant un exemple de symbole matriciel codé 3 agencé sensiblement à mi-hauteur d'un des flancs 2. La figure 2 montre un autre exemple avec un symbole matriciel codé 3 prévu en zone basse du flanc 2. Dans cet exemple, le symbole matriciel codé 3 est agencé en suivant la courbure circonférentielle C1 du pneumatique, tel que montré sur la figure. Dans un mode de réalisation non limitatif, tel qu'illustré à la figure 2, le symbole matriciel codé a la forme d'un rectangle et il s'allonge dans la circonférence du pneumatique.

La figure 3 illustre un autre exemple de symbole matriciel codé 3 agencé sur un flanc 2. On observe que le symbole matriciel 3 est profilé suivant la courbure radiale C2 du flanc du pneumatique.

La figure 4 illustre une échelle connue des valeurs de luminance, selon des valeurs de 0 à 100. Selon cette échelle, le noir absolu a une valeur de 0, tandis qu'à l'autre extrémité de l'échelle, le blanc absolu a une valeur de 100. La figure 4 illustre également des exemples de valeurs pour des parties sombres et des parties claires utilisées avec des symboles matriciels codés réalisés sur un pneumatique selon l'invention.

Dans un exemple non limitatif, l'appareil de mesure approprié est un spectro-colorimètre CM 700D de la marque KONICA-MINOLTA. Cet appareil est adapté pour mesurer :
- la luminosité L*1, L*2 d'une zone du symbole matriciel codé 3 (partie sombre ou partie claire);
- une composante a* qui définit une première nuance de couleur entre le rouge et le vert ;
   une composante b* qui définit une deuxième nuance de couleur entre le jaune et le bleu.

On positionne ledit appareil sur la partie du symbole matriciel codé 3 que l'on veut mesurer et ledit appareil donne les valeurs des trois paramètres L*, a*, b*. Ces mesures sont effectuées avec le mode SCI (Mode de réflexion spéculaire incluse) paramétré à un angle de 10° et un réglage de la lumière de type D65 (réglage défini selon la Commission Internationale de l'Eclairage, CIE).

Avec l'appareil de mesure, il est ainsi possible de quantifier la différence de luminosité entre les parties sombres et les parties claires du symbole matriciel codé. Plus cette différence de luminosité est importante, meilleure sera la lecture de ce symbole matriciel par un appareil de lecture adéquat. L'appareil de mesure du symbole matriciel codé est par exemple le DataMan 8600 de la société Cognex ®.

### PROCEDE DE REALISATION

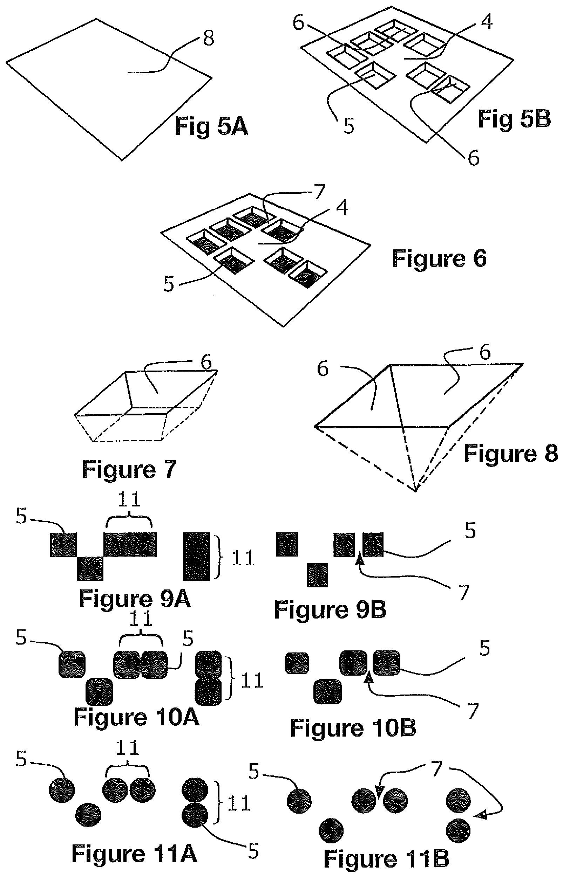

Selon un mode de réalisation préférentiel, les symboles matriciels codés sont réalisés à l'aide d'un procédé impliquant une phase réalisée lors du moulage du pneumatique, et une phase effectuée après démoulage. Ce procédé consiste tout d'bord à prévoir une zone de code matriciel sur un moule du pneumatique. Ensuite, le pneumatique est vulcanisé avec le moule comportant l'empreinte. Après démoulage, et avant une étape de traitement par laser (décrite plus en détails ultérieurement) on obtient une zone claire 8 telle que montré à la figure 5A.

A la figure 5B, après une étape d'enlèvement de matière, les parois 6 des parties sombres sont formées. Grâce à cet enlèvement de matière, les parties sombres sont en creux par rapport aux parties claires 4. Le niveau d'enfoncement, ou profondeur de creux formé par les parties sombres est compris entre 0,1 et 0,8 mm, et plus préférentiellement entre 0,2 et 0,5 mm.

Comme il a déjà été expliqué ci-dessus, le procédé de réalisation du symbole matriciel codé comprend :
- l'étape de moulage d'une zone claire 8 sur le flanc du pneumatique ;
- l'étape de gravure au laser des partis sombres 5 du symbole matriciel codé sur la zone claire du flanc du pneumatique, les parties claires 4 du symbole matriciel codé étant des portions de la zone claire non gravées.
   Les parties claires 4 ont la première luminosité L*1 supérieure à la seconde luminosité L*2 des parties sombres 5 d'au moins 5 points.

La figure 6 illustre le même symbole matriciel après traitement par laser. Les parties sombres 5 sont à ce stade pourvues de l'état de surface permettant de produire les valeurs de luminosité prévues pour ces parties. Par exemple, on obtient les valeurs de luminosité grâce à une étape de réalisation d'un état de surface déterminé dans le fond des parties sombres, cet état de surface présentant une rugosité Rz comprise entre 50 et 300 µm. Par des réglages appropriés des paramètres du laser, il est possible de réaliser simultanément les étapes d'enlèvement de matière et de réalisation d'un état de surface déterminé dans le fond des parties sombres.

L'utilisation d'un laser présente de très nombreux avantages. En outre, le laser permet de réaliser de façon simple et rapide le traitement de surface requis pour atteindre les niveaux de luminance souhaités. Le laser permet aussi de réaliser des codes différents, sans que les moules doivent être modifiés. Le laser est aussi très adapté à un processus industriel impliquant un très important volume de pièces réalisées. Par exemple, les codes à graver peuvent être préprogrammés avant des opérations de gravure laser en grande série. Enfin, le laser permet de réaliser des codes de grande qualité, avec d'excellentes caractéristiques de lisibilité.

### SPECIFICITES DES PARTIES SOMBRES

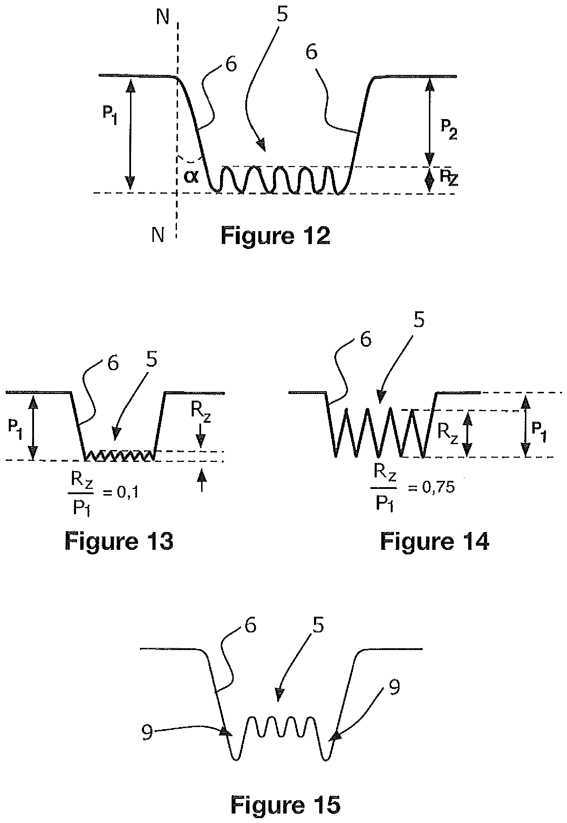

Les figures 7 et 8 illustrent schématiquement des exemples de formes pour les parties sombres 5. On observe que les parties sombres 5 sont délimitées par des parois 6, ces parois 6 étant inclinées par rapport à une normale N au flanc 2 du pneumatique d'un angle de dépouille α compris entre 5 et 50 degrés et plus préférentiellement entre 5 et 20 degrés. La figure 12 montre la normale N et l'angle de dépouille. La figure 8 montre une variante de réalisation dans laquelle les parois 6 d'une partie sombre se rejoignent au centre de cette partie, formant ainsi une pyramide inversée. En variante, le sommet de la pyramide est de forme arrondie.

Les figures 9A et 9B, 10A et 10B, 11A et 11B montrent des exemples de formes et d'agencement de parties sombres 5 par rapport à des parties claires 4. Comme il a déjà été expliqué précédemment, les parties sombres 5 sont en creux par rapport aux parties claires 4, du fait de la réalisation de ces parties sombres par gravure laser. Les parties sombres sont carrées (figures 9A et 9B), carrées avec des coins arrondis (figures 10A et 10B), ou en forme de disque (figures 11A et 11B). Selon les agencements, plusieurs parties sombres 5 peuvent être adjacentes, et peuvent dans ce cas être séparées par une cloison 7, formée par le jumelage de deux parois 6 opposées de deux parties sombres voisines. Ces cloisons 7 permettent de bien visualiser chacune des parties sombres 5, facilitant ainsi les opérations de décodage. Deux ou plus parties sombres adjacentes peuvent former une zone sombre 11 dont la surface est sensiblement un multiple des parties sombres unitaires. Les figures 9A, 10A et 11A illustrent des tels exemples.

La variante de réalisation de la figure 11A prévoit une forme des motifs constituant les parties sombres en forme de disque, les motifs adjacents étant distinct les uns des autres et ne se touchant tout au plus qu'en un seul point. Cette variante de réalisation permet de maximiser la surface sombre, tout en séparant les parties sombres les unes des autres.

L'intérêt de réaliser des motifs ronds est de faciliter le décodage par analyse d'image. Chaque motif constituant les parties sombres est séparé de ses éventuels voisins identiques, ce qui facilite la détermination du périmètre de chaque partie. Un motif circulaire présente une symétrie de révolution avec un centre. C'est donc le motif existant le plus simple. Il présente aussi la particularité, grâce à cette simplicité, de pouvoir être davantage miniaturisé qu'un motif carré. Le motif carré avec coins arrondis est intermédiaire entre le carré et le rond.

Les figures 12, 13, 14 et 15 illustrent des exemples de réalisation de parties sombres. Ces parties sont délimitées par des parois 6, tel que préalablement décrit. Comme cela est illustré à la figure 12, les parois 6 sont inclinées d'un angle de dépouille a. Cet angle de dépouille α est compris entre 3 et 50 degrés. Dans un mode de réalisation préférentiel, l'angle de dépouille α est compris entre 5 et 20 degrés. Dans les exemples de réalisation des figures 12, 13, 14 et 15 la rugosité Rz des parties sombres est comprise entre 50 et 300 µm. A la figure 13, la rugosité Rz est faible par rapport à la profondeur P1. Ainsi le rapport Rz/P1 est inférieur ou égal à 0,1. La figure 14 illustre un autre exemple de réalisation, dans lequel la rugosité Rz est proche de la profondeur P1. Ainsi le rapport Rz/P1 est supérieur ou égal à 0,75. La figure 15 illustre un exemple de réalisation dans lequel des sillons 9 sont agencés à la périphérie de la partie sombre 5. Ces sillons 9 permettent une meilleure délimitation de cette partie sombre, pour une lisibilité optimale du code intelligent.

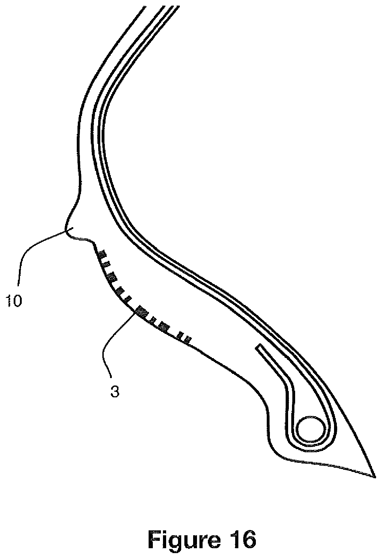

La figure 16 illustre un exemple de réalisation dans lequel un flanc comprend une protubérance 10 permettant d'assurer la protection d'un symbole matriciel codé 3 situé au voisinage immédiat de la protubérance.

Les dispositions respectives des parties claires et sombres permettent de réaliser une quasi-infinité de combinaisons, chacune correspondant à un code distinct. Les données contenues dans les codes peuvent varier selon les besoins. Ces données peuvent par exemple comporter des identifiants de dimension et/ou de type de pneumatique, d'origine ou le nom du manufacturier, ou des données de numéro de série unique pour chaque pneumatique.

On notera enfin qu'aux figures 2, 3, 16, le symbole matriciel codé est positionné en zone basse du pneumatique, c'est-à-dire en-dessous de la zone de largeur maximale du flanc. Par « zone de largeur maximale du flanc », on entend l'ensemble des points de ce flanc qui sont le plus axialement extérieur. Dit autrement, chaque point de cette zone de largeur maximale est selon une vue en coupe méridienne, à la plus grande distance d'un plan équatorial, distance mesurée selon une direction axiale, le pneumatique étant monté et gonflé sur une jante recommandée par l'ETRTO. Plus particulièrement, le symbole matriciel codé est à proximité d'un bourrelet du flanc. Lorsque le pneumatique est monté et gonflé sur une jante ayant un crochet de jante, la distance entre le symbole matriciel codé et le crochet de jante est compris entre 5 et 30 mm. Cette distance est par exemple mesurée entre une partie proximale du symbole matriciel codé avec le crochet de jante, c'est-à-dire une zone inférieure du symbole matriciel codé, et ledit crochet de jante.

L'invention n'est pas limitée aux exemples décrits et représentés et diverses modifications peuvent y être apportées sans sortir de son cadre qui est défini par les revendications.

Dans un mode de réalisation non limitatif, c'est l'ensemble du symbole matriciel codé qui est encastré dans le flanc.

Numéros de référence employés sur les figures
- 1: Pneumatique
- 2: Flanc
- 3: Symbole matriciel codé
- 4: Partie claire
- 5: Partie sombre
- 6: Paroi
- 7: Cloison
- 8: Zone claire
- 9: Sillon
- 10: Protubérance de flanc
- 11: Zone sombre

## Revendications

1. Pneumatique (1) en matériau caoutchoutique dont au moins un des flancs (2) comporte un symbole matriciel codé (3) venu de matière avec l'au moins un des flancs (2), ledit symbole matriciel codé (3) comprenant des parties sombres (5) et des parties claires (4) **caractérisé en ce que** les parties claires (4) ont une première luminosité L*1 supérieure à une seconde luminosité L*2 des parties sombres (5) d'au moins 5 points, la luminosité L* est exprimée dans une échelle allant de 0 à 100 selon le modèle colorimétrique L*a*b* établit par la Commission Internationale de l'Eclairage en 1976, la valeur 100 représente le blanc ou la réflexion totale, la valeur 0, le noir ou l'absorption totale et dans ce modèle colorimétrique a* et b* sont des coordonnées de chromaticité et **en ce que** la rugosité Rz des parties sombres (5) est comprise entre 50 et 300 µm.

2. Pneumatique (1) selon la revendication 1, **caractérisé en ce que** la seconde luminosité L*2 des parties sombres (5) du symbole matriciel codé (3) est comprise entre 5 et 18, et préférentiellement entre 8 et 16.

3. Pneumatique (1) selon l'une des revendications 1 ou 2, **caractérisé en ce que** la première luminosité L*1 des parties claires (4) du symbole matriciel codé (3) est comprise entre 20 et 35.

4. Pneumatique (1) selon la revendication 1, **caractérisé en ce que** la seconde luminosité L*2 des parties sombres (5) du symbole matriciel codé (3) est comprise entre 8 et 16 et **en ce que** la première luminosité L*1 des parties claires (4) est comprise entre la seconde luminosité L*2 des parties sombres (5) augmentée de 8 points et la seconde luminosité L*2 des parties sombres (5) augmentée de 16 points.

5. Pneumatique (1) selon la revendication 1, **caractérisé en ce que** la seconde luminosité L*2 des parties sombres (5) est comprise entre 8 et 16 et **en ce que** la première luminosité L*1 des parties claires (4) est comprise entre 20 et 26.

6. Pneumatique (1) selon l'une quelconque des revendications 1 à 5, **caractérisé en ce que** deux parties sombres (5) adjacentes sont séparées par une cloison (7).

7. Pneumatique (1) selon l'une quelconque des revendications 1 à 6, **caractérisé en ce que** des parties sombres (5) sont globalement carrées.

8. Pneumatique (1) selon l'une quelconque des revendications 1 à 7, **caractérisé en ce que** des parties sombres (5) ont globalement une forme de disque.

9. Pneumatique (1) selon l'une quelconque des revendications 1 à 8, **caractérisé en ce que** les parties sombres (5) ont au moins une dimension comprise entre 0,2 mm et 1 mm, plus préférentiellement entre 0,3 et 0,7 mm.

10. Pneumatique (1) selon l'une quelconque des revendications 1 à 9, **caractérisé en ce que** les parties sombres (5) sont délimitées par un sillon (9).

11. Pneumatique (1) selon l'une quelconque des revendications 1 à 10, **caractérisé en ce que** l'au moins un des flancs (2) comprend une protubérance (10) pour la protection du symbole matriciel codé (3).

12. Pneumatique (1) selon l'une quelconque des revendications 1 à 11, **caractérisé en ce que** le symbole matriciel codé (3) suit la courbure radiale de l'au moins un des flancs (2).

13. Pneumatique (1) selon l'une quelconque des revendications 1 à 12, **caractérisé en ce que** chaque flanc (2) dudit pneumatique (1) comporte au moins un symbole matriciel codé (3).

14. Pneumatique (1) selon la revendication 13, **caractérisé en ce que** les symboles matriciels codés (3) sont différents d'un flanc (2) à l'autre dudit pneumatique (1).

15. Pneumatique (1) selon l'une quelconque des revendications 1 à 14, **caractérisé en ce que** les parties claires (4) du symbole matriciel codé (3) sont réalisées au cours d'une opération de moulage du pneumatique (1) et les parties sombres (5) sont réalisées par un procédé de gravure au laser après cette opération de moulage.

16. Pneumatique (1) selon l'une quelconque des revendications 1 à 15, **caractérisé en ce que** le symbole matriciel codé (3) est adapté pour coder des données sur 50 à 120 digits, et plus préférentiellement sur 96 digits.

17. Procédé de réalisation d'un symbole matriciel codé (3) sur un pneumatique (1), ledit symbole matriciel codé (3) comprenant des parties sombres (5) et des parties claires (4), ledit procédé de réalisation comportant :
- une étape de moulage d'une zone claire (8) sur un flanc (2) du pneumatique (1);
- une étape de gravure au laser des partis sombres (5) du symbole matriciel codé (3) sur la zone claire (8) du flanc (2) du pneumatique (1), les parties claires (4) du symbole matriciel codé (3) étant des portions de la zone claire (8) non gravées, **caractérisé en ce que** les parties claires (4) ont une première luminosité L*1 supérieure à une seconde luminosité L*2 des parties sombres (5) d'au moins points, la luminosité L* est exprimée dans une échelle allant de 0 à 100 selon le modèle colorimétrique L*a*b* établit par la Commission Internationale de l'Eclairage en 1976, la valeur 100 représente le blanc ou la réflexion totale, la valeur 0, le noir ou l'absorption totale et dans ce modèle colorimétrique a* et b* sont des coordonnées de chromaticité et **en ce que** la rugosité Rz des parties sombres (5) est comprise entre 50 et 300 µm.

## Patentansprüche

1. Reifen (1) aus Gummimaterial, von dem wenigstens eine der Flanken (2) ein codiertes Matrixsymbol (3) aufweist, das mit der wenigstens einen der Flanken (2) einstückig ausgebildet ist, das codierte Matrixsymbol (3) umfassend dunkle Abschnitte (5) und helle Abschnitte (4), **dadurch gekennzeichnet, dass** die hellen Abschnitte (4) eine erste Helligkeit L*1 aufweisen, die um wenigstens 5 Punkte höher als eine zweite Helligkeit L*2 der dunklen Abschnitte (5) ist, die Helligkeit L* auf einer Skala von 0 bis 100 gemäß dem kolorimetrischen Modell L*a*b* ausgedrückt wird, das 1976 von der Internationalen Beleuchtungskommission festgelegt wurde, der Wert 100 weiß oder die vollständige Reflexion repräsentiert, der Wert 0 schwarz oder die vollständige Absorption repräsentiert und in diesem kolorimetrischen Modell a* und b* Chromatizitätskoordinaten sind, **und dadurch, dass** die Rauheit Rz der dunklen Abschnitte (5) zwischen 50 und 300 µm beträgt.

2. Reifen (1) nach Anspruch 1, **dadurch gekennzeichnet, dass** die zweite Helligkeit L*2 der dunklen Abschnitte (5) des codierten Matrixsymbols (3) zwischen 5 und 18 und vorzugsweise zwischen 8 und 16 liegt.

3. Reifen (1) nach einem der Ansprüche 1 oder 2, **dadurch gekennzeichnet, dass** die erste Helligkeit L*1 der hellen Abschnitte (4) des codierten Matrixsymbols (3) zwischen 20 und 35 liegt.

4. Reifen (1) nach Anspruch 1, **dadurch gekennzeichnet, dass** die zweite Helligkeit L*2 der dunklen Abschnitte (5) des codierten Matrixsymbols (3) zwischen 8 und 16 liegt, und **dadurch, dass** die erste Helligkeit L*1 der hellen Abschnitte (4) zwischen der zweiten Helligkeit L*2 der dunklen Abschnitte (5), die um 8 Punkte erhöht ist, und der zweiten Helligkeit L*2 der dunklen Abschnitte (5), die um 16 Punkte erhöht ist, liegt.

5. Reifen (1) nach Anspruch 1, **dadurch gekennzeichnet, dass** die zweite Helligkeit L*2 der dunklen Abschnitte (5) zwischen 8 und 16 liegt, **und dadurch, dass** die erste Helligkeit L*1 der hellen Abschnitte (4) zwischen 20 und 26 liegt.

6. Reifen (1) nach einem der Ansprüche 1 bis 5, **dadurch gekennzeichnet, dass** zwei benachbarte dunkle Abschnitte (5) durch ein Trennelement (7) getrennt sind.

7. Reifen (1) nach einem der Ansprüche 1 bis 6, **dadurch gekennzeichnet, dass** die dunklen Abschnitte (5) allgemein quadratisch sind.

8. Reifen (1) nach einem der Ansprüche 1 bis 7, **dadurch gekennzeichnet, dass** die dunklen Abschnitte (5) allgemein scheibenförmig sind.

9. Reifen (1) nach einem der Ansprüche 1 bis 8, **dadurch gekennzeichnet, dass** die dunklen Abschnitte (5) wenigstens eine Abmessung zwischen 0,2 mm und 1 mm, besser noch zwischen 0,3 und 0,7 mm aufweisen.

10. Reifen (1) nach einem der Ansprüche 1 bis 9, **dadurch gekennzeichnet, dass** die dunklen Abschnitte (5) von einer Furche (9) begrenzt sind.

11. Reifen (1) nach einem der Ansprüche 1 bis 10, **dadurch gekennzeichnet, dass** die wenigstens eine der Flanken (2) einen Vorsprung (10) zum Schutz des codierten Matrixsymbols (3) umfasst.

12. Reifen (1) nach einem der Ansprüche 1 bis 11, **dadurch gekennzeichnet, dass** das codierte Matrixsymbol (3) der radialen Krümmung der wenigstens einen der Flanken (2) folgt.

13. Reifen (1) nach einem der Ansprüche 1 bis 12, **dadurch gekennzeichnet, dass** jede Flanke (2) des Reifens (1) wenigstens ein codiertes Matrixsymbol (3) aufweist.

14. Reifen (1) nach Anspruch 13, **dadurch gekennzeichnet, dass** sich die codierten Matrixsymbole (3) von einer Flanke (2) des Reifens (1) zur anderen unterscheiden.

15. Reifen (1) nach einem der Ansprüche 1 bis 14, **dadurch gekennzeichnet, dass** die hellen Abschnitte (4) des codierten Matrixsymbols (3) während eines Vorgangs des Formens des Reifens (1) und die dunklen Abschnitte (5) durch ein Lasergravurverfahren nach diesem Formungsvorgang hergestellt werden.

16. Reifen (1) nach einem der Ansprüche 1 bis 15, **dadurch gekennzeichnet, dass** das codierte Matrixsymbol (3) geeignet ist, Daten auf 50 bis 120 Stellen und besser noch auf 96 Stellen zu codieren.

17. Verfahren zur Herstellung eines codierten Matrixsymbols (3) auf einem Reifen (1), das codierte Matrixsymbol (3) umfassend dunkle Abschnitte (5) und helle Abschnitte (4), das Herstellungsverfahren aufweisend:
- einen Schritt des Formens eines hellen Bereichs (8) auf einer Flanke (2) des Reifens (1);
- einen Schritt des Lasergravierens der dunklen Abschnitte (5) des codierten Matrixsymbols (3) auf dem hellen Bereich (8) der Flanke (2) des Reifens (1), wobei die hellen Bereiche (4) des codierten Matrixsymbols (3) ungravierte Teilbereiche des hellen Bereichs (8) sind, **dadurch gekennzeichnet, dass** die hellen Abschnitte (4) eine erste Helligkeit L*1 aufweisen, die um wenigstens 5 Punkte höher als eine zweite Helligkeit L*2 der dunklen Abschnitte (5) ist, die Helligkeit L* auf einer Skala von 0 bis 100 gemäß dem kolorimetrischen Modell L*a*b* ausgedrückt wird, das 1976 von der Internationalen Beleuchtungskommission festgelegt wurde, der Wert 100 weiß oder die vollständige Reflexion repräsentiert, der Wert 0 schwarz oder die vollständige Absorption repräsentiert und in diesem kolorimetrischen Modell a* und b* Chromatizitätskoordinaten sind, und dadurch, dass die Rauheit Rz der dunklen Abschnitte (5) zwischen 50 und 300 µm beträgt.

## Claims

1. Tyre (1) made from a rubbery material, at least one of the sidewalls (2) of which comprises a coded matrix symbol (3) formed as an integral part of the at least one of the sidewalls, the said coded matrix symbol (3) comprising dark parts (5) and light parts (4), **characterized in that** the light parts (4) have a first lightness L*1 greater than a second lightness (L*2) of the dark parts (5) by at least 5 points, the lightness L* being expressed using a scale that ranges from 0 to 100 according to the L*a*b* colour model established by the International Commission on Illumination in 1976, the value 100 representing white or total reflection; the value 0 representing black or total absorption, and, in this colour model, a* and b* being chromaticity coordinates, **and in that** the roughness Rz of the dark parts (5) is between 50 and 300 µm.

2. Tyre (1) according to Claim 1, **characterized in that** the second lightness L*2 of the dark parts (5) of the coded matrix symbol (3) is comprised between 5 and 18, and preferably between 8 and 16.

3. Tyre (1) according to one of Claims 1 or 2, **characterized in that** the first lightness L*1 of the light parts (4) of the coded matrix symbol (3) is comprised between 20 and 35.

4. Tyre (1) according to Claim 1, **characterized in that** the second lightness L*2 of the dark parts (5) of the coded matrix symbol (3) is comprised between 8 and 16 and **in that** the first lightness L*1 of the light parts (4) is comprised between the second lightness L*2 of the dark parts (5) increased by 8 points and the second lightness L*2 of the dark parts (5) increased by 16 points.

5. Tyre (1) according to Claim 1, **characterized in that** the second lightness L*2 of the dark parts (5) is comprised between 8 and 16 and **in that** the first lightness L*) of the light parts (4) is comprised between 20 and 26.

6. Tyre (1) according to any one of Claims 1 to 6, **characterized in that** two adjacent dark parts (5) are separated by a partition (7).

7. Tyre (1) according to any one of Claims 1 to 6, **characterized in that** dark parts (5) are roughly square.

8. Tyre (1) according to any one of Claims 1 to 7, **characterized in that** dark parts (5) are roughly disc shaped.

9. Tyre (1) according to any one of Claims 1 to 8, **characterized in that** the dark parts (5) have at least one dimension comprised between 0.2 mm and 1 mm, more particularly between 0.3 and 0.7 mm.

10. Tyre (1) according to any one of Claims 1 to 9, **characterized in that** the dark parts (5) are delimited by a groove (9).

11. Tyre (1) according to any one of Claims 1 to 10, **characterized in that** the at least one of the sidewalls (2) comprises a protuberance (10) for protecting the coded matrix symbol (3).

12. Tyre (1) according to any one of Claims 1 to 11, **characterized in that** the coded matrix symbol (3) follows the radial curvature of the at least one of the sidewalls (2).

13. Tyre (1) according to any one of Claims 1 to 12, **characterized in that** each sidewall (2) of the said tyre (1) comprises at least one coded matrix symbol (3).

14. Tyre (1) according to Claim 13, **characterized in that** the coded matrix symbols (3) differ from one sidewall (2) of the said tyre (1) to the other.

15. Tyre (1) according to any one of Claims 1 to 14, **characterized in that** the light parts (4) of the coded matrix symbol (3) are produced during a tyre moulding operation and the dark parts (5) are produced by a laser etching method after this moulding operation.

16. Tyre (1) according to any one of Claims 1 to 15, **characterized in that** the coded matrix symbol (3) is designed to code data over 50 to 120 digits, and more preferably over 96 digits.

17. Method for producing a coded matrix symbol (3) on a tyre (1), the said coded matrix symbol (3) comprising dark parts (5) and light parts (4), the said production method involving:
- a step of moulding a light zone (8) on one sidewall (2) of the tyre (1);
- a step of laser etching the dark parts (5) of the coded matrix symbol (3) on the light zone (8) of the sidewall (2) of the tyre (1), the light parts (4) of the coded matrix symbol (3) being non-etched portions of the light zone (8), **characterized in that** the light parts (4) have a first lightness L*1 greater than a second lightness L*2 of the dark parts (5) by at least 5 points, , the lightness L* being expressed using a scale that ranges from 0 to 100 according to the L*a*b* colour model established by the International Commission on Illumination in 1976, the value 100 representing white or total reflection; the value 0 representing black or total absorption, and, in this colour model, a* and b* being chromaticity coordinates, **and in that** the roughness Rz of the dark parts (5) is between 50 and 300 µm.
